# EUROPÄISCHE PATENTSCHRIFT

(11) **EP 1 230 474 B1**
(45) Veröffentlichungstag und Bekanntmachung des Hinweises auf die Patenterteilung: **31.08.2005**
(21) Anmeldenummer: 00974226.3
(22) Anmeldetag: 15.11.2000
(51) Int. Cl.: F02G 1/043, H02K 7/18, H02K 35/02

(54) **ENERGIEWANDLER UND VERFAHREN ZUM BETRIEB EINES ENERGIEWANDLERS**
ENERGY CONVERTER AND A METHOD FOR OPERATING AN ENERGY CONVERTER
CONVERTISSEUR D'ENERGIE ET PROCEDE D'EXPLOITATION D'UN CONVERTISSEUR D'ENERGIE

(30) Priorität: 16.11.1999 EP 99811050; 14.06.2000 EP 00810510
(43) Veröffentlichungstag der Anmeldung: 14.08.2002
(73) Patentinhaber: Stirling Systems AG, 8200 Schaffhausen (CH)
(72) Erfinder: ANDEREGG, René, CH-8245 Feuerthalen (CH)
(74) Vertreter: Graf, Werner
(86) Internationale Anmeldenummer: PCT/CH2000/000612
(87) Internationale Veröffentlichungsnummer: WO 2001/036802

(56) Entgegenhaltungen:
- EP-A- 0 445 510
- US-A- 3 063 002
- US-A- 4 642 547
- US-A- 4 873 826

## Beschreibung

Die Erfindung betrifft einen Energiewandler umfassend einen Freikolben-Stirlingmotor sowie einen direkt daran gekoppelten Lineargenerator gemäss dem Oberbegriff von Anspruch 1. Die Erfindung betrifft weiter ein Verfahren zum Betrieb eines Energiewandlers gemäss dem Oberbegriff von Anspruch 9 und 12. Ein solches System wird z.B. in der US-A-4 642 547 offenbart.

Aus der Druckschrift US 4,873,826 ist ein Energiewandler umfassend einen Freikolben-Stirlingmotor sowie einen direkt daran gekoppelten Lineargenerator bekannt. Der Freikolben-Stirlingmotor wandelt die zugeführte Wärmeenergie in eine lineare Bewegung. Diese lineare Bewegung wird in dem direkt an den Freikolben-Stirlingmotor angekoppelten Lineargenerator in elektrische Energie umgewandelt. Der Zweck dieses Energiewandlers ist thermische Energie effizient in elektrische Energie zu wandeln. Die erzeugte elektrische Energie kann in einem Inselbetrieb einem Verbraucher zugeführt werden. Die elektrische Energie kann auch in ein öffentliches Versorgungsnetz eingespeist werden. Dabei ist die Leistungsregelung des Freikolben-Stirlingmotors für den Betrieb des Energiewandlers von zentraler Bedeutung, um einerseits die transienten Vorgänge beim Starten und Stoppen des Energiewandlers zu beherrschen und andererseits trotz gegebenenfalls variierender Wärmezufuhr bzw. variierender Ableitung elektrischer Energie einen stabilen und effizienten Betrieb des Energiewandlers zu gewährleisten.

Nachteilig an diesem bekannten Energiewandler ist die Tatsache, dass der zur Leistungsregelung verwendete Autotransformator relativ teuer und träge ist, sodass der Energiewandler relativ teuer und zudem nur beschränkt regelbar ist.

Es ist Aufgabe der vorliegenden Erfindung einen wirtschaftlich vorteilhafteren Energiewandler umfassend einen Freikolben-Stirlingmotor sowie einen direkt daran gekoppelten Lineargenerator zu bilden.

Diese Aufgabe wird gelöst mit einem Energiewandler aufweisend die Merkmale von Anspruch 1. Die Unteransprüche 2 bis 8 betreffen weitere, vorteilhafte Ausgestaltungen. Die Aufgabe wird weiter gelöst mit einem Verfahren zum Betrieb eines Energiewandlers aufweisend die Merkmale von Anspruch 9. Die Unteransprüche 10 und 11 betreffen weitere, vorteilhafte Verfahrensschritte. Die Aufgabe wird weiter gelöst mit einem Verfahren zum Betrieb des Energiewandlers aufweisend die Merkmale von Anspruch 11. Der Unteranspruch 12 betrifft einen weiteren, vorteilhaften Verfahrensschritt.

Die Aufgabe wird insbesondere gelöst mit einem Energiewandler umfassend einen Freikolben-Stirlingmotor sowie einen direkt daran gekoppelten Lineargenerator, wobei der Lineargenerator zumindest zwei Spulen umfasst, in welchen die Spannung induziert wird, und wobei eine Schaltvorrichtung derart ausgestaltet ist, dass die Spulen ansteuerbar sowohl in Serieschaltung als auch in Parallelschaltung verbindbar sind.

Ein Vorteil des erfindungsgemässen Energiewandlers ist darin zu sehen, dass zur Leistungsregelung nur noch eine zusätzliche, kostengünstige Schaltvorrichtung erforderlich ist, mit welcher die Spulen des Lineargenerators entsprechend in Serie oder parallel geschaltet werden. Der erfindungsgemässe Energiewandler ist somit kostengünstig herstellbar, was insbesondere bei dessen Verwendung in Kleinanlagen und beispielsweise Einfamilienhäusern von entscheidender Bedeutung ist. Der Freikolben-Stirlingmotor des erfindungsgemässen Energiewandlers weist ein vorteilhaftes Einschwingverhalten auf, da durch das Schalten der Spulen die abgegebene Leistung variierbar ist und zeitlich schnell geändert werden kann.

Dadurch wird ein grosser Hub des Arbeitskolbens, was die Gefahr eines Anschlagen des Arbeitskolbens birgt, verhindert.

In einer vorteilhaften Ausgestaltung weist der Lineargenerator vier separate Spulen auf, in welchen je eine Spannung induziert wird. Diese vier Spulen sind in unterschiedlichen Kombinationen zusammenschaltbar, so auch derart, dass alle vier Spulen in Serie oder parallel geschaltet sind. Da zwischen der abgegebenen Leistung und der Spannung ein quadratischer Zusammenhang besteht, kann die vom Lineargenerator abgegebene Leistung durch ein entsprechendes Schalten der Spulen um bis zu einem Faktor 16 variiert werden.

Eine Leistungsregelung ist auch am Freikolben-Stirlingmotor möglich, indem beispielsweise die Hitze bzw. die zugeführte Wärmemenge variiert wird. Diese Regelung ist jedoch äusserst träge. Dagegen weist die erfindungsgemässe Vorrichtung den Vorteil auf, dass die Spulen sehr schnell und in unterschiedlicher Kombination zusammenschaltbar sind.

In einer vorteilhaften Ausgestaltung ist am Erhitzer bzw. am Wärmetauscher des Freikolben-Stirlingmotors ein Temperatursensor angeordnet, welcher mit einer Regelvorrichtung verbunden ist. Die Spulen sind in Funktion der gemessenen Temperatur schaltbar, beispielsweise derart, dass ein vorgegebener Temperatursollwert nicht überschritten wird. Somit wird die vom Lineargenerator an das Verbrauchernetz abgegebene elektrische Leistung derart gesteuert, dass am Wärmetauscher der vorgegebene Temperatursollwert nicht überschritten wird.

In einer vorteilhaften Ausgestaltung umfasst der Energiewandler einen beim Wärmetauscher des Freikolben-Stirlingmotors angeordneten Ofen mit Brenner. Ein derartiger Energiewandler ist beispielsweise als eine Heizungs-und Stromerzeugungsanlage geeignet, um beispielsweise in Einfamilienhäusern sowohl Wärmeenergie zur Gebäudebeheizung bzw. zur Brauchwassererwärmung als auch elektrische Energie zur Verfügung zu stellen. Vorzugsweise ist der Lineargenerator direkt an das öffentliche Stromversorgungsnetz angeschlossen. Als Brenner sind unterschiedlichste Ausführungsformen geeignet, so beispielsweise auch ein Einstufenbrenner, oder ein sogenannter Rekuperativbrenner, wie dieser beispielsweise in der Druckschrift EP 0 903 539 A2 offenbart ist.

Ein Vorteil ist die Tatsache, dass der Freikolben-Stirlingmotor mit einer beliebigen Wärmequelle betreibbar ist, so zum Beispiel auch mit einer Solaranlage oder mit einer Holzfeuerung.

In einem besonders vorteilhaften Verfahren wird der Energiewandler mit einem Brenner erhitzt, wobei beim Hochfahren des Energiewandlers die Leistungsabgabe des Lineargenerators derart durch geeignetes Schalten der Spulen reduziert wird, dass der Energiewandler in kurzer Zeit, vorzugsweise innerhalb von weniger als 8 Minuten, dessen stationäre Betriebstemperatur erreicht. Ein Vorteil dieses Verfahrens ist darin zu sehen, dass der durch das Hochfahren bewirkte Schadstoffausstoss gering ausfällt, und somit Umweltschutzvorschriften wie beispielsweise die in Schweiz gültige Vorschrift der Luftreinhalteverordnung LRV92 eingehalten werden können.

In einem weiteren vorteilhaften Verfahren wird die Temperatur des Erhitzers bzw. des Wärmetauschers des Freikolben-Stirlingmotor gemessen, wobei beim Überschreiten einer vorgebbaren Referenztemperatur T_{ref} die Leistungsabgabe des Lineargenerators durch entsprechendes Schalten der Spulen derart erhöht wird, dass die Temperatur T_{E} des Erhitzers die vorgebbare Referenztemperatur T_{ref} nicht übersteigt. Ein Vorteil dieses Verfahrens ist darin zu sehen, dass eine übermässige thermische Belastung des Wärmetauschers vermeidbar ist.

Wenn der Energiewandler während dem Anfahren an das Netz geschaltet wird ergibt sich das Problem, dass, bei entsprechender Phasenlage zwischen Netz und Lage des Generators, der Generator durch das Netz motorisch angetrieben wird. Dies bewirkt, dass der Generator und der daran gekoppelte Arbeitskolben des Freikolben-Strilingmotors während dem Anfahren sehr schnell eine grosse Hubamplitude aufweise, sodass die Gefahr besteht, dass der Generator und/oder der Arbeitskolben mit einer vorhandenen Wegbegrenzung bzw. einem Anschlag kollidiert. Es ist daher von entscheidender Wichtigkeit den Energiewandler beim Anfahren derart zu steuern, dass der Hub des Arbeitskolbens nicht unzulässig hohe Werte aufweist. Dies wird insbesondere dadurch erreicht, dass die Spulen des Generators beim Anfahren in Serie geschaltet sind und während dem Anfahren nachträglich in Parallelschaltung geschaltet werden.

Der Energiewandler wird im weiteren an Hand von Ausführungsbeispielen beschrieben, welche immer eine Einspeisung der erzeugten elektrischen Energie in ein öffentliches Versorgungsnetz aufweisen. Der Energiewandler ist jedoch auch für einen Inselbetrieb geeignet, beispielsweise in Kombination mit einem Sonnenkollektor, welcher die Sonnenstrahlen in thermische Energie wandelt. Der Energiewandler kann natürlich mit einem Sonnenkollektor auch netzparallel betrieben werden.

Es zeigen:
- Fig. 1: einen Schnitt einer nur symbolisch dargestellten Seitenansicht eines Energiewandlers;
- Fig. 2: eine Aufsicht kreuzförmig angeordneter Spulen eines Lineargenerators;
- Fig. 3a, 3b, 3c, 3d: unterschiedlich geschaltete Spulen des Lineargenerators;
- Fig. 4a, 4b: weitere, unterschiedlich geschaltete Spulen eines Lineargenerators;
- Fig. 5: schematisch einen weiteren Spannungsteiler;
- Fig. 6: ein Energiewandler mit einem Brenner, einem Freikolben-Stirlingmotor sowie einem Lineargenerator;
- Fig. 7: schematisch eine Aufschaltung des Lineargenerators ans Netz;
- Fig. 8: die Hubamplitude in Funktion der Zeit während des Anfahrens.

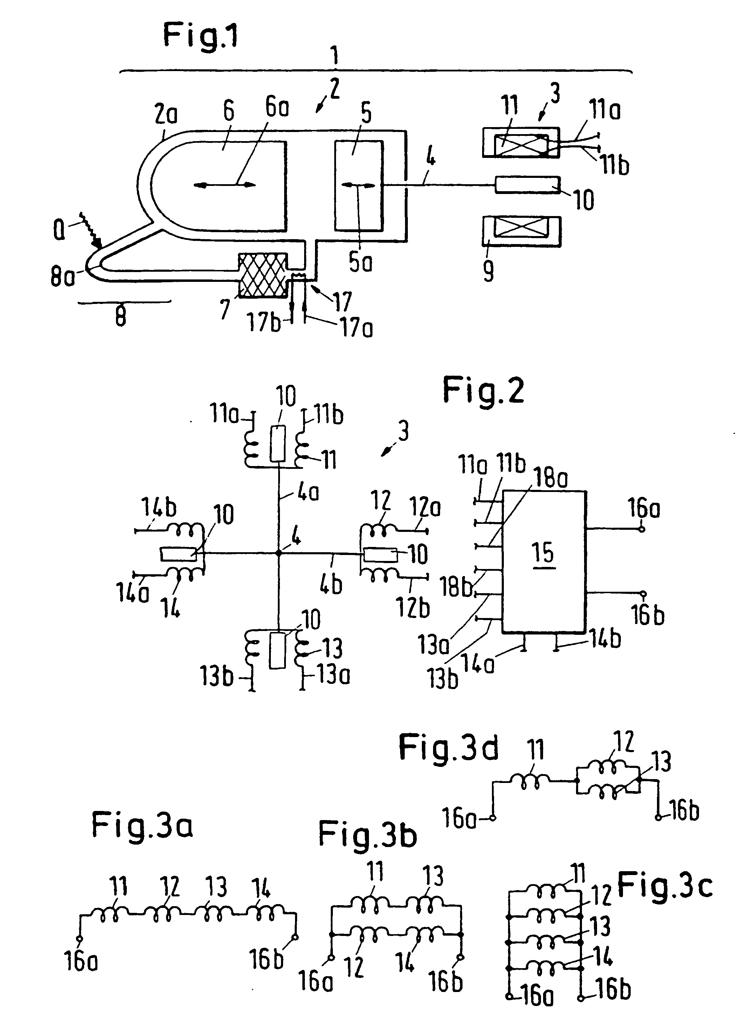

Der in Fig. 1 dargestellte Energiewandler 1 umfasst einen Freikolben-Stirlingmotor 2 sowie einen über eine Kupplung 4 direkt daran gekoppelten Lineargenerator 3. Der Freikolben-Stirlingmotor 2 mit Aussengehäuse 2a umfasst im Inneren einen in einer Bewegungsrichtung 6a beweglich gelagerten Verdrängerkolben 6 sowie einen ebenfalls in Bewegungsrichtung 5a beweglich gelagerten Arbeitskolben 5. Zwischen dem Verdrängerkolben 6 bzw. dem Arbeitskolben 5 und dem Aussengehäuse 2a besteht eine Spaltdichtung. Ein zwischen dem Verdrängerkolben 6 und dem Arbeitskolben 5 in den Innenraum des Freikolben-Stirlingmotors 2 mündender Kanal verläuft über einen Regenerator 7 in einen als Wärmetauschrohr 8a ausgestalteten Wärmetauscher 8. Üblicherweise sind eine Vielzahl von Wärmetauschrohren 8a angeordnet, wobei in Fig. 1 zur übersichtlichen Darstellung nur ein einziges Wärmetauschrohr 8a dargestellt ist. Diese Wärmetauschrohre 8a, über welche der Wärmefluss Q einfliesst, werden auch als Rohrbündel, Rohrwendel oder als Rohrschlange bezeichnet. Unmittelbar vor dem Regenerator 7 ist ein weiterer Wärmetauscher 17 mit Zuleitung 17a und Ableitung 17b angeordnet. Der Innenraum des Freikolben-Stirlingmotors 2 ist mit Heliumgas gefüllt. Der Regenerator 7 könnte auch innerhalb des Aussengehäuses 2a angeordnet sein.

Der Generator 3 umfasst eine Spule 11 mit Spulenanschlussleitungen 11a, 11b, ein Spulengehäuse 9 sowie ein in Bewegungsrichtung 5a beweglich gelagerten und mit dem Arbeitskolben 5 verbundenes Permanentmagnet 10. Das Permanentmagnet 10 induziert in der Spule 11 eine Spannung. In einer bevorzugten Ausführungsform werden die Spulenanschlussleitungen 11a, 11b direkt mit dem öffentlichen Versorgungsnetz verbunden. Die Arbeitsfrequenz des Freikolben-Stirlingmotors 2 beträgt daher etwa 50 Hz in Europa, bzw. 60 Hz in USA.

Die in Fig. 2 dargestellte Aufsicht zeigt eine vertikal zur Betrachtungsebene verlaufende Kupplungsstange 4, an deren Ende zwei kreuzförmig angeordnete Halterungen 4a, 4b angeordnet sind, an deren Ende je ein Permanentmagnet 10 befestigt ist. Jedes Permanentmagnet 10 ist von einer separaten Spule 11, 12, 13, 14 mit Spulenanschlussleitungen 11a, 11b, 12a, 12b, 13a, 13b, 14a, 14b umgeben. Diese vier Spulen 11, 12, 13, 14 sind über eine ansteuerbare Schaltvorrichtung 15 auf unterschiedliche Weise zusammenschaltbar. Die Schaltvorrichtung 15 weist Ausgänge 16a, 16b auf, welche direkt an das öffentliche Spannungsnetz anschliessbar sind. Die Schaltvorrichtung 15 umfasst Schalter, welche beispielsweise als klassische mechanische Schalter oder auch als kontaktlose elektronische Schaltelemente ausgestaltet sind, um die Spulen 11, 12, 13, 14, wie in den Fig. 3a, 3b und 3c dargestellt, in unterschiedlichen Anordnungen zu verbinden. Fig. 3a zeigt eine Serieschaltung aller Spulen 11, 12, 13, 14. Fig. 3b sowie Fig. 3d zeigt je eine Serie-Parallelschaltung. Fig. 3c zeigt eine Parallelschaltung. In der Schaltung gemäss Fig. 3c wird die grösste elektrische Leistung in das Verbrauchernetz 32 übertragen, wogegen mit einer Schaltung gemäss Fig. 3a die geringste elektrische Leistung in das Verbrauchernetz 32 übertragen wird.

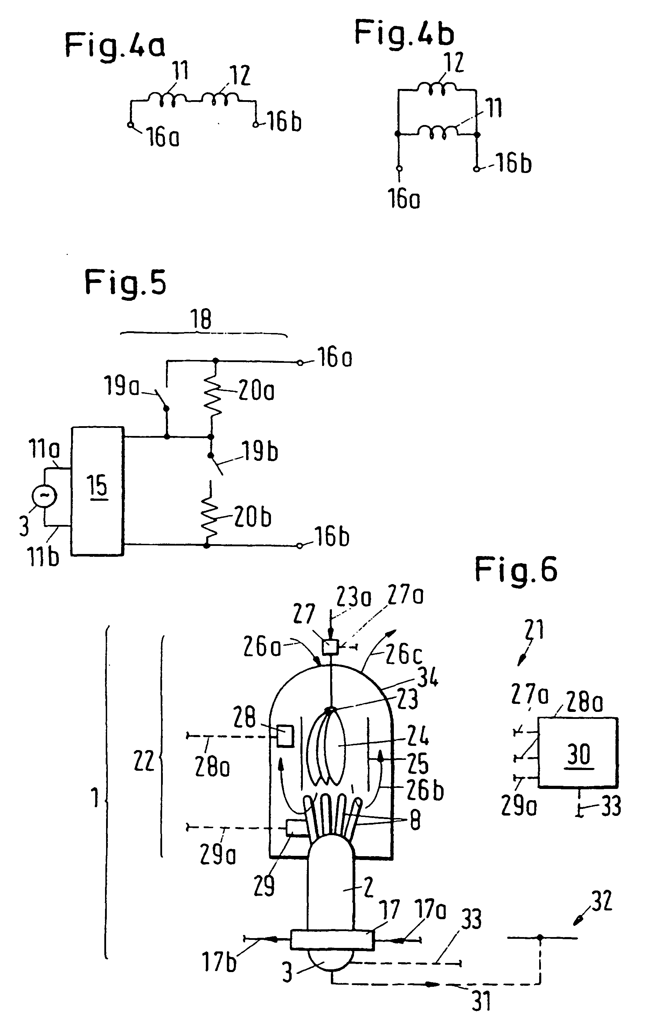

Der Lineargenerator 3 kann je nach Erfordernis eine unterschiedliche Anzahl separater Spulen 11, 12, 13, 14 aufweisen, so beispielsweise zwei, drei, vier, acht oder sechzehn Spulen 11, 12, 13, 14. Die Figuren 4a und 4b zeigen einen Lineargenerator 3 mit nur zwei Spulen 11, 12. Der Lineargenerator 3 kann eine beliebige Anzahl Spulen 11, 12, 13, 14 aufweisen, insbesondere auch eine ungerade Anzahl.

Fig. 5 zeigt einen zusätzlichen, der Schaltvorrichtung 15 nachgeschalteten Spannungsteiler 18, um die vom Lineargenerator 3 an das Verbrauchernetz 16a, 16b übertragene Leistung anzusteuem. Der Lineargenerator 3 könnte auch, ohne die Schaltvorrichtung 15, direkt mit dem Spannungsteiler 18 verbunden sein. Bei geschlossenem Schalter 19a und geöffnetem Schalter 19b beträgt die Generatorspannung 230 Volt, falls keine Schaltvorrichtung 15 angeordnet ist. Bei geschlossenem Schalter 19b und geöffnetem Schalter 19a sowie entsprechender Wahl der Impedanz 20a, 20b beträgt die Generatorspannung 110 Volt, falls keine Schaltvorrichtung 15 angeordnet ist. Somit ist die vom Lineargenerator 3 an das Verbrauchernetz 16a, 16b abgegebene Leistung durch ein Schalten der entsprechenden Schalter 19a, 19b ansteuerbar. Die Impedanzen 20a, 20b können als Kapazitäten, Widerstände, Induktivitäten oder deren Kombinationen ausgestaltet sein.

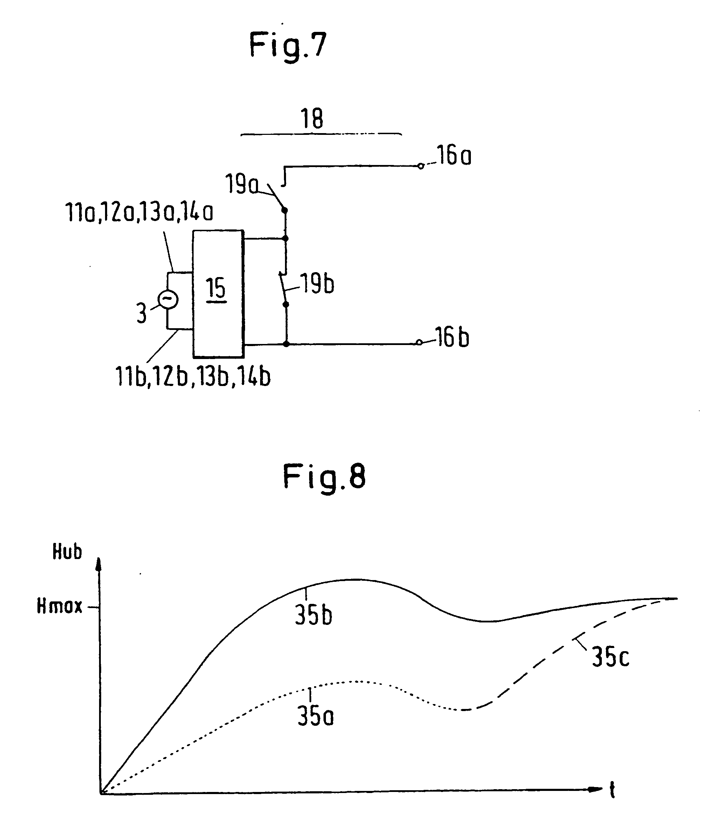

Fig. 6 zeigt ein weiteres Ausführungsbeispiel eines Energiewandlers 1, wobei auf der Seite des Erhitzers 8 des Freikolben-Stirlingmotors 2 ein Ofen 34 mit einem Brenner 23 angeordnet ist. Der Brenner 23 ist beispielsweise als Regeneratorbrenner, wie dieser in der Druckschrift EP 0 903 539 offenbart ist, ausgestaltet. Die aus dem Brenner 23 austretenden Verbrennungsgase bilden Flammen 24, welche zu dem aus Wärmetauschrohren 8a bestehenden Wärmetauscher 8 hin verlaufen. Im Ofen 34 sind Wärmeleitbleche 25, auch als Fiammrohr oder Trennrohr bezeichnet, angeordnet, welche die Verbrennungsabgase gegen oben hin zurück leiten. Der Brennstoff wird über eine Brennstoffzuleitung 23a zugeführt, wobei zwischen er Brennstoffzuleitung 23a und der Düse 23 ein über eine Leitung 27a elektrisch ansteuerbares Ventil 27 mit Zündvorrichtung angeordnet ist. Dem Ofen 34 wird über die Zuleitung 26a Frischluft zugeführt, und über die Ableitung 26c Verbrennungsabgase abgeführt. Die vom Lineargenerator 3 erzeugte elektrische Energie wird über eine elektrische Energieleitung 31 in das öffentliche Netz 32 gespeist. Der Ofen 34 kann auch als ein Heizkessel 22 bezeichnet werden. Am Freikolben-Stirlingmotor 2 ist ein Wärmetauscher 17 angeordnet, wobei über eine Zuleitung 17a kühles Wasser zugeführt, und über die Ableitung 17b erwärmtes Wasser abgeführt wird. Dieses erwärmte Wasser dient zum Heizen oder zur Erwärmung von Brauchwasser. Im Innenraum des Heizkessels 22 ist ein erster Temperatursensor 28 mit elektrischer Leitung 28a angeordnet, um beispielsweise die Temperatur der rückströmenden Verbrennungsabgase 26b zu messen. Am Wärmetauscher 8 ist ein zweiter Temperatursensor 29 mit elektrischer Leitung 29a angeordnet. Die in Fig. 6 dargestellte Heizungs- und Stromerzeugungsvorrichtung 21 umfasst eine Regelvorrichtung 30, welche über elektrische Leitungen 27a, 28a, 29a und 33 mit den Temperatursensoren 28, 29, mit dem Ventil 27, sowie mit der Schaltvorrichtung 15 verbunden sind.

Die Heizungs- und Stromerzeugungsvorrichtung 21 kann beispielsweise mit folgendem Verfahren betrieben werden: Auf Grund bestehender Vorschriften oder aus Umweltschutzgründen wird der Heizkessel 22 derart hochgefahren, dass die stationäre Betriebstemperatur möglichst schnell erreicht wird. Mit den Temperatursensoren 28, 29 wird die Temperatur des Wärmetauschers 8 bzw. der Abgase gemessen. Zu Beginn des Hochfahrens sind die Spulen 11, 12, 13, 14 des Lineargenerators 3 kurzgeschlossen, um eine Bewegung des Freikolben-Stirlingmotors 2 und damit ein Wärmeentzug des Wärmetauschers 8 aus dem Innenraum des Ofens 34 möglichst zu verhindern. Sobald die Temperatur am zweiten Sensor 29 etwa 600 bis 700 Grad beträgt werden die Spulen 11, 12, 13, 14 beispielsweise wie in Fig. 3a dargestellt geschaltet, sodass sich der Freikolben-Stirlingmotor 2 zu bewegen beginnt, dem Wärmetauscher 8 etwas Wärme entzogen wird, und eine geringe elektrische Leistung in das öffentliche Netz 32 gespeist wird. Die Spulen 11, 12, 13, 14 werden derart geschaltet, dass die dem Wärmetauscher 8 entnommene Wärme, bzw. die abgeführte elektrische Leistung möglichst gering ist, jedoch zumindest derart, dass die Temperatur des Wärmetauschers 8 den Wertebereich von 600 bis 700 Grad C nicht übersteigt. Dadurch wird der Wärmetauscher, beispielsweise dessen Rohre 8a, vor Überhitzung geschützt. Sobald am ersten Temperatursensor 28 eine Temperatur von 850 bis 900 Grad C auftritt ist der Brennraum mit dessen Temperatur hochgefahren und die stationäre Betriebstemperatur ist erreicht. Nun werden die Spulen 11, 12, 13, 14 wie in Fig. 3c dargestellt geschaltet, um eine möglichst grosse elektrische Leistung in das Verbrauchernetz 32 zu übertragen. Dieses erfindungsgemässe Verfahren erlaubt ein schnelles, Schadstoff armes Hochfahren der Heizungs- und Stromerzeugungsvorrichtung 21. Dieses Verfahren ist besonders vorteilhaft in Kombination mit einem Regeneratorbrenner, wie dieser in der Druckschrift EP 0 903 539 offenbart ist. Ein derartiger Regeneratorbrenner weist zwei unterschiedliche Betriebszustände auf, ein Brennzustand bei tieferer Temperatur mit erhöhtem Schadstoffanteil, und ein Brennzustand bei hoher Temperatur mit reduziertem Schadstoffanteil. Beim Hochfahren eines derartigen Regeneratorbrenners ist es von entscheidender Bedeutung, den Brennzustand bei hoher Temperatur möglichst schnell zu erreichen. Eine Heizungs- und Stromerzeugungsvorrichtung 21 umfassend den erfindungsgemässen Energiewandler 1 in Kombination mit dem Regeneratorbrenner weist den Vorteil auf, dass die Verbrennung sehr schadstoffarm und mit hohem Wirkungsgrad erfolgt, dass die Spulen 11, 12, 13, 14 des Lineargenerators 3 über die Schaltvorrichtung 15 direkt ans Verbrauchernetz anschliessbar ist, und dass die Regelung sehr kostengünstig, zuverlässig und robust ausgestaltet ist.

Die im vorhergehenden Ausführungsbeispiel erwähnten Temperaturwerte sind nur als ein Beispiel zu verstehen. Die Temperaturwerte, gemäss denen geregelt wird, könnten auch anders gewählt sein.

Es ist von entscheidender wirtschaftlicher Bedeutung, den Energiewandler 1 kostengünstig und sicher hochzufahren und an das öffentliche Stromversorgungsnetz anzukoppeln. In den Figuren 7 und 8 ist ein Verfahren zum Anfahren und zum Aufschalten des Energiewandlers 1 an das Netz dargestellt. Im dargestellten Ausführungsbeispiel kann das Anfahren in drei Phasen unterteilt werden.
In der ersten Phase ist der Lineargenerator 3, wie in Fig. 7 durch den geöffneten Schalter 19a dargestellt, vom Netz 16a, 16b getrennt, und über den geschlossenen Schalter 19b kurzgeschlossen. Dadurch wird die Bewegung des Lineargenerators 3 behindert, sodass sich der Freikolben-Stirlingmotor 2 schnell aufwärmen kann.
In der zweiten Phase werden die Spulen 11,12,13,14 vor dem Aufschalten an das Netz in Serieschaltung geschaltet und daraufhin die Spulen 11,12,13,14 an das Netz aufgeschaltet, indem der Schalter 19b geöffnet und der Schalter 19a geschlossen wird. Während dem Anfahren schwingt der Lineargenerator 3 im wesentlichen sinusförmig hin und her, wobei der Hub bzw. die Amplitude dieser Schwingung in Funktion der Zeit wie mit der Kurve 35a dargestellt verläuft. Die Serieschaltung bewirkt, dass der Hub des Generators 3 wesentlich unter dem mit Hmax bezeichneten, maximal zulässigen Hub liegt. Nach einer gewissen Zeit werden in der dritten Phase die Spulen 11,12,13,14 durch die Schaltvorrichtung 15 parallel geschaltet, sodass sich der Hub des Generators 3, entsprechend dem Verlauf der Kurve 35c, erhöht. Die Kurve 35c weist kein Überschwingen auf. Durch dieses Verfahren kann der Generator 3 sicher angefahren werden, ohne dass ein unzulässig hoher Hub Hmax auftritt, welcher beispielsweise die Aufhängevorrichtung der beweglichen Teile beschädigen könnte. Die Kurve 35b zeigt das Anfahrverhalten des Generators 3 wenn die Spulen 11,12,13,14 beim Aufschalten an das Netz von Anbeginn parallel geschaltet sind. Das Netz wirkt dabei derart motorisch auf den Generator 3, dass dieser entsprechend dem Verlauf der Kurve 35b sehr schnell einen unzulässig hohen Hub aufweist.

In einem weiteren Anfahrverfahren kann auf die erste Phase verzichtet werden, sodass der Generator nicht kurzgeschlossen wird und direkt, wie mit der zweiten Phase beschrieben, in Serieschaltung an das Netz aufgeschaltet wird.

An Stelle der reinen Serie- und Parallelschaltung, wie diese in den Fig. 3a, 3c, 4a, 4b dargestellt sind, können die Spulen 11,12,13,14 auch in Mischformen geschaltet werden, wie dies in den Fig. 3b, 3d dargestellt ist, um die in der zweiten Phase und dritten Phase beschriebenen Effekte zur temporären Reduktion des Hubes des Generators 3 zu erzeugen.

## Patentansprüche

1. Energiewandler (1) umfassend einen Freikolben-Stirlingmotor (2) sowie einen direkt daran gekoppelten Lineargenerator (3), **dadurch gekennzeichnet, dass** der Lineargenerator (3) zumindest zwei Spulen (11, 12, 13, 14) umfasst, in welchen die Spannung induziert wird, und dass eine Schaltvorrichtung (15) derart ausgestaltet ist, dass die Spulen (11, 12, 13, 14) ansteuerbar sowohl in Serieschaltung als auch in Parallelschaltung verbindbar sind.

2. Energiewandler nach Anspruch 1, **dadurch gekennzeichnet, dass** der Lineargenerator (3) zumindest drei Spulen (11, 12, 13, 14) umfasst, und dass die Spulen (11, 12, 13, 14) ansteuerbar in Serieschaltung und/oder in Parallelschaltung verbindbar sind.

3. Energiewandler nach einem der vorhergehenden Ansprüche, **dadurch gekennzeichnet, dass** die Spulen (11, 12, 13, 14) mit einem Stromnetz (32) verbindbar sind.

4. Energiewandler nach einem der vorhergehenden Ansprüche, **dadurch gekennzeichnet, dass** der Freikolben-Stirlingmotor (2) einen Erhitzer (8) aufweist, dass ein Temperatursensor (29) im Bereich des Erhitzers (8) angeordnet ist, dass der Temperatursensor (29) mit einer Regelvorrichtung (30) verbunden ist, und dass die Regelvorrichtung (30) mit der Schaltvorrichtung (15) verbunden und derart ausgestaltet ist, dass die Spulen (11, 12, 13, 14) in Abhängigkeit der gemessenen Temperatur in Serieschaltung oder Parallelschaltung verbindbar sind

5. Energiewandler nach einem der vorhergehenden Ansprüche, **dadurch gekennzeichnet, dass** den Spulen (11, 12, 13, 14) nachfolgend ein schaltbarer Spannungsteiler (18) angeordnet ist, welcher einerseits mit dem Stromnetz (32) und andererseits mit den Spulen (11, 12, 13, 14) verbunden ist.

6. Energiewandler nach einem der vorhergehenden Ansprüche, **dadurch gekennzeichnet, dass** der Freikolben-Stirlingmotor (2) einen Erhitzer (8) aufweist, und dass beim Erhitzer (8) ein Ofen (34) mit Brenner (23), oder eine Holzfeuerung oder ein Solarkollektor angeordnet ist.

7. Energiewandler nach Anspruch 6, **dadurch gekennzeichnet, dass** der Freikolben-Stirlingmotor (2) einen Regenerator (7) aufweist bei welchem zudem ein Wärmetauscher (17) angeordnet ist, und dass der Wärmetauscher (17) mit einem Wasserkreislauf für die Heizung und/oder für Brauchwasser verbindbar ist.

8. Energiewandler nach einem der Ansprüche 6 oder 7, **dadurch gekennzeichnet dass** der Ofen (34) mit Brenner (23) als ein Einstufenbrenner oder als ein Regeneratorbrenner ausgestaltet ist.

9. Verfahren zum Betrieb eines an ein Netz gekoppelten Energiewandlers (1), insbesondere nach einem der vorhergehenden Ansprüche, umfassend einen Freikolben-Stirlingmotor (2), einen direkt daran gekoppelten Lineargenerator (3), und im Lineargenerator (3) angeordnete Spulen (11, 12, 13, 14), in welchen während dem Betrieb eine Spannung induziert wird, **dadurch gekennzeichnet, dass** zum Verändern der Leistungsabgabe die Spulen (11, 12, 13, 14) von einer Schaltvorrichtung (15) sowohl in Serieschaltung, als auch in Parallelschaltung oder in einer Kombination von Serie- und Parallelschaltung geschaltet werden, können.

10. Verfahren nach Anspruch 9, **dadurch gekennzeichnet, dass** der Freikolben-Stirlingmotor (2) des Energiewandlers (1) mit einem Brenner (23) erhitzt wird, und dass beim Hochfahren des Energiewandlers (1) die Leistungsabgabe des Lineargenerators (3) derart durch geeignetes Schalten der Spulen (11, 12, 13, 14) reduziert wird, dass der Energiewandler (1) in kurzer Zeit, vorzugsweise in weniger als 10 Minuten, dessen stationäre Betriebstemperatur erreicht.

11. Verfahren nach Anspruch 10, **dadurch gekennzeichnet, dass** der Freikolben-Stirüngmotor (2) einen Erhitzer (8) aufweist, dessen Temperatur (T_{E}) gemessen wird, und dass beim Überschreiten einer vorgebbaren Referenztemperatur (T_{ref}) die Leistungsabgabe des Lineargenerators (3) durch entsprechendes Schalten der Spulen (11, 12, 13, 14) derart erhöht wird, dass die Temperatur (T_{E}) des Erhitzers (8) die vorgebbare Referenztemperatur (T_{ref}) nicht übersteigt.

12. Verfahren zum Anfahren eines Energiewandlers (1) und zu dessen Aufschalten an das Netz, wobei der Energiewandler (1) einen Freikolben-Stirlingmotor (2), einen direkt daran gekoppelten Lineargenerator (3), und im Lineargenerator (3) angeordnete Spulen (11, 12, 13, 14) umfasst, in welchen während dem Betrieb eine Spannung induziert wird, **dadurch gekennzeichnet,**
- **dass** die Spulen (11,12,13,14) vor dem Aufschalten an das Netz in Serieschaltung geschaltet sind,
- **dass** die Spulen (11,12,13,14) an das Netz aufgeschaltet werden,
- und **dass** die Spulen (11, 12, 13, 14) während dem Anfahren in Parallelschaltung geschaltet werden.

13. Verfahren nach Anspruch 12, **dadurch gekennzeichnet,**
- **dass** der Lineargenerator (3) vor dem Aufschalten an das Netz kurz geschlossen ist,
- und **dass** während dem Anfahren der Kurzschluss des Lineargenerators (3) unterbrochen wird und die Spulen (11,12,13,14) an das Netz aufgeschaltet werden.

## Claims

1. Energy converter (1) comprising a free-piston Stirling engine (2) and also a linear generator (3) directly coupled thereto, **characterised in that** the linear generator (3) includes at least two coils (11, 12, 13, 14) in which the voltage is induced and **in that** a switching apparatus (15) is designed such that the coils (11, 12, 13, 14) can be switched and connected both in a series circuit and also in a parallel circuit.

2. Energy converter in accordance with claim 1, **characterised in that** the linear generator (3) includes at least three coils (11, 12, 13, 14) and **in that** the coils (11, 12, 13, 14) can be switched and connected in a series circuit and/or in a parallel circuit.

3. Energy converter in accordance with one of the preceding claims, **characterised in that** the coils (11, 12, 13, 14) can be connected to a power network (32).

4. Energy converter in accordance with any one of the preceding claims, **characterised in that** the free-piston Stirling engine (2) has a heater (8), **in that** a temperature sensor (29) is arranged in the vicinity of the heater (8), **in that** the temperature sensor (29) is connected to a regulating apparatus (30) and **in that** the regulating apparatus (30) is connected to the switching apparatus (15) and is designed such that the coils (11, 12, 13, 14) can be connected in a series circuit and in a parallel circuit in dependence on the measured temperature.

5. Energy converter in accordance with any one of the preceding claims, **characterised in that** a switchable voltage divider (18) is arranged following the coils (11, 12, 13, 14) and is connected on the one hand to the current network (32) and on the other hand to the coils (11, 12, 13, 14).

6. Energy converter in accordance with any one of the preceding claims, **characterised in that** the free-piston Stirling engine (2) has a heater (8) and **in that** a stove (34) with burner (23) or a wood fire or a solar collector is arranged at the heater (8).

7. Energy converter in accordance with claim 6, **characterised in that** the free-piston Stirling engine (2) has a regenerator (7) in which a heat exchanger (17) is additionally arranged and **in that** the heat exchanger (17) is connectable to a water circuit for the heating and/or for the supply of water.

8. Energy converter in accordance with one of the claims 6 or 7, **characterised in that** the stove (34) with a burner (23) is designed as a single-stage burner or as a regenerator burner.

9. Method for the operation of an energy converter (1) coupled to a supply network, in particular in accordance with any one of the preceding claims, including a free-piston Stirling engine (2), a linear generator (3) directly coupled thereto and coils (11, 12, 13, 14) arranged in the linear generator (3) in which a voltage is induced during the operation, **characterised in that**, in order to change the power output, the coils (11, 12, 13, 14) can be connected by a switching apparatus (15) both in a series circuit and also in a parallel circuit or in a combination of a series and a parallel circuit.

10. Method in accordance with claim 9, **characterised in that** the free-piston Stirling engine (2) of the energy converter (1) is heated with a burner (23) and **in that** during the running up of the energy converter (1) the power yield of the linear generator (3) is so reduced by suitable switching of the coils (11, 12, 13, 14) that the energy converter (1) reaches its steady state operating temperature in a short time, preferably in less than 10 minutes.

11. Method in accordance with claim 10, **characterised in that** the free-piston Stirling engine (2) has a heater (8), the temperature (T_{E}) of which is measured and **in that**, on exceeding a predeterminable reference temperature (T_{ref}), the power yield of the linear generator (3) is increased by corresponding switching of the coils (11, 12, 13, 14) such that the temperature (T_{E}) of the heater (8) does not exceed the predeterminable reference temperature (T_{ref}).

12. Method for the starting up of an energy converter (1) and for its connection to the power supply network, wherein the energy converter (1) includes a free-piston Stirling engine (2), a linear generator (3) directly coupled thereto and coils (11, 12, 13, 14) arranged in the linear generator (3) in which a voltage is induced during the operation, **characterised in that**
- the coils (11, 12, 13, 14) are connected in a series circuit prior to being connected to the power supply network,
- **in that** the coils (11, 12, 13, 14) are connected to the power supply network
- and **in that** the coils (11, 12, 13, 14) are connected in a parallel circuit during the running up.

13. Method in accordance with claim 12, **characterised in that**
- the linear generator (3) is short-circuited prior to the connection to the power supply network,
- and **in that** the short circuit of the linear generator (3) is interrupted during the running up and the coils (11, 12, 13, 14) are connected to the power supply network.

## Revendications

1. Convertisseur d'énergie (1) comprenant un moteur Stirling à piston libre (2) ainsi qu'un générateur linéaire (3) couplé directement audit moteur, **caractérisé en ce que** le générateur linéaire (3) comprend au moins deux bobines (11, 12, 13, 14) dans lesquelles la tension est induite, et **en ce qu'**un dispositif de commutation (15) est réalisé de manière à ce que les bobines (11, 12, 13, 14) peuvent être commandées aussi bien montées en série que reliées en parallèle.

2. Convertisseur d'énergie selon la revendication 1, **caractérisé en ce que** le générateur linéaire (3) comprend au moins trois bobines (11, 12, 13, 14) et **en ce que** les bobines (11, 12, 13, 14) peuvent être commandées montées en série et/ou reliées en parallèle.

3. Convertisseur d'énergie selon une des revendications précédentes, **caractérisé en ce que** les bobines (11, 12, 13, 14) peuvent être reliées à un réseau de courant (32).

4. Convertisseur d'énergie selon une des revendications précédentes, **caractérisé en ce que** le moteur Stirling à piston libre (2) présente un dispositif de réchauffement (8), **en ce qu'**un capteur de température (29) est disposé dans la zone du dispositif de réchauffement (8), **en ce que** le capteur de température (29) est relié à un dispositif de réglage (30) et **en ce que** le dispositif de réglage (30) est relié au dispositif de commutation (15) et réalisé de manière à ce que les bobines (11, 12, 13, 14) puissent être reliées selon la température mesurée en série ou de façon parallèle.

5. Convertisseur d'énergie selon une des revendications précédentes, **caractérisé en ce qu'**un diviseur de tension (18) susceptible de commuter est disposé en aval des bobines (11, 12, 13, 14), lequel diviseur de tension est connecté d'une part avec le réseau de courant (32) et d'autre part, avec les bobines (11, 12, 13, 14).

6. Convertisseur d'énergie selon une des revendications précédentes, **caractérisé en ce que** le moteur Stirling à piston libre (2) présente un dispositif de réchauffement (8) et **en ce que** dans le cas du dispositif de réchauffement (8) on a disposé un four (34) avec un brûleur (23) ou un foyer à bois ou un panneau solaire.

7. Convertisseur d'énergie selon la revendication 6, **caractérisé en ce que** le moteur Stirling à piston libre (2) présente un régénérateur (7) auquel on a tout d'abord disposé un échangeur de chaleur (17), et **en ce que** l'échangeur de chaleur (17) peut être relié avec un circuit d'eau pour le chauffage et/ou pour l'eau usée.

8. Convertisseur d'énergie selon une des revendications 6 ou 7, **caractérisé en ce que** le four (34) avec brûleur (23) est réalisé en tant que brûleur à un étage ou en tant que brûleur régénérateur.

9. Procédé pour le fonctionnement d'un convertisseur d'énergie (1) couplé à un réseau, notamment selon une des revendications précédentes, comprenant un moteur stirling à piston libre (2), un générateur linéaire (3) couplé audit moteur et des bobines (11, 12, 13, 14) disposées dans le générateur linéaire (3), dans lesquelles bobines une tension est induite pendant le fonctionnement, **caractérisé en ce que** pour modifier l'émission de puissance, les bobines (11, 12, 13, 14) peuvent être connectées par un dispositif de commutation (15) aussi bien en série qu'en parallèle ou dans une combinaison d'une connexion en série ou en parallèle.

10. Procédé selon la revendication 9, **caractérisé en ce que** le moteur Stirling à piston libre (2) du convertisseur d'énergie (1) est chauffé par un brûleur (23) et **en ce que** l'émission de puissance du générateur linéaire (3) est réduite par une commutation des bobines (11, 12, 13, 14) appropriée lors de la montée en puissance du convertisseur d'énergie (1) de manière à ce que le convertisseur d'énergie (1) atteint en peu de temps, de préférence en moins de 10 minutes, sa température de service stationnaire.

11. Procédé selon la revendication 10, **caractérisé en ce que** le moteur stirling à piston libre (2) présente un dispositif de réchauffement (8) dont on mesure la température (T_{E}) et **en ce que** lors du dépassement d'une température de référence (T_{ref}) prédéterminée, l'émission de puissance du générateur linéaire (3) est augmentée par une connexion des bobines (11, 12, 13, 14) de manière à ce que la température (TE) du dispositif de réchauffement (8) ne dépasse pas la température de référence (T_{ref}) prédéterminée.

12. Procédé pour démarrer un convertisseur d'énergie (1) et le connecter au réseau ; le convertisseur d'énergie (1) comprenant un moteur Stirling à piston libre (2), un générateur linéaire (3) couplé directement audit moteur et des bobines (11, 12, 13, 14) disposées dans le générateur linéaire (3), dans lesquelles bobines on induit une tension pendant le fonctionnement, **caractérisé en ce que**,
- les bobines (11, 12, 13, 14, 15) sont connectées en série avant la connexion au réseau,
- les bobines (11, 12, 13, 14) sont connectées au réseau,
- les bobines (11, 12, 13, 14) sont connectées pendant le démarrage en connexion en parallèle.

13. Procédé selon la revendication 12, **caractérisé en ce que**,
- le générateur linéaire (3) est mise en court-circuit avant la connexion au réseau,
- et **en ce que** le court-circuit du générateur linéaire (3) est interrompu pendant le démarrage et que les bobines (11, 12, 13, 14) sont connectées au réseau.
